Europäisches Patentamt

European Patent Office

Office européen des brevets

(11) Publication number: **0 319 490**
**A2**

## (12) EUROPEAN PATENT APPLICATION

(21) Application number: **88830510.9**

(22) Date of filing: **29.11.88**

(51) Int. Cl.⁴: **B 60 T 15/24**

(30) Priority: **04.12.87 IT 6804587**

(43) Date of publication of application:
**07.06.89 Bulletin 89/23**

(84) Designated Contracting States:
**AT BE DE ES FR GB NL SE**

(71) Applicant: **INDUSTRIE MAGNETI MARELLI S.r.l.**
**Via Adriano 81**
**I-20128 Milano (IT)**

(72) Inventor: **Angelillo, Domenico**
**Via Pisa, 54**
**I-20099 Sesto S. Giovanni (Milano) (IT)**

(74) Representative: **Quinterno, Giuseppe et al**
**c/o Jacobacci-Casetta & Perani S.p.A. Via Alfieri, 17**
**I-10121 Torino (IT)**

(54) **A pneumatic valve for controlling the braking of a trailer, in particular a servo-distributor with adjustable predominance.**

(57)     The valve comprises a body (51) in which are mounted
a movable member (60) in which is formed a normally-closed
valve (90b, 92) which controls the pressure supplied to the
braking members of the trailer,
a movable piston (100) arranged to be moved by a brake-operating pressure towards the member (60) and to cause the
opening of the valve (90b, 92),
a reaction piston (71) facing the member (60) and exposed to
the pressure supplied to the brake members as a result of the
opening of the valve (90b, 92); the reaction piston (71) being
arranged to return the actuating piston (100), against the action
of resilient biassing means (77), to a position in which it enables
the valve (90b, 92) to close again when the pressure supplied to
the brake members reaches a predetermined value dependent
on the value of the said brake-operating pressure, and
a manually-operable member (52, 53) or adjusting the predo-
minance which is arranged to modify the position of the
movable member (60) in the body (51).

    The movable member (60) and the reaction piston (71) are
formed so as to be in contact with each other in the absence of
a brake-operating pressure so that the member (52, 53) for
adjusting the predominance can move the movable member
(60) together with the reaction piston (71) while at the same
time varying the loading of the resilient biassing means (77).

FIG. 1

## Description

## A pneumatic valve for controlling the braking of a trailer, in particular a servo-distributor with adjustable predominance

The present invention relates to a pneumatic valve for controlling the braking of a trailer, and more particularly to a valve of the type comprising a body in which are mounted

a movable member in which there is formed a normally-closed valve, with a seat and an obturator for controlling the pressure supplied to the brake members of the trailer,

a movable piston arranged to be moved by a brake-operating pressure towards the member and to cause the opening of the valve,

a reaction piston facing the member and exposed to the pressure supplied to the brake members as a result of the opening of the valve; the reaction piston being arranged to return the actuating piston, against the action of resilient biassing means, to a position in which it enables the valve to close again when the pressure supplied to the brake members reaches a predetermined value dependent on the value of the brake-operating pressure, and

manually-operable means for adjusting the predominance arranged to modify the position of the movable member in the body.

By the term predominance is meant the entry into operation of the brake members of the trailer at a higher pressure than that supplied to the brake members of the tractor vehicle. This predominance prevents the trailer from exerting a thrust on the tractor vehicle during braking since this would create conditions unfavourable to the stability and road-holding of the two coupled vehicles.

A valve of this type is described in detail in European patent application No.88830357.5

The pneumatic valve according to the invention for controlling the braking of a trailer is characterised in that the movable member and the reaction piston are so formed that they are in contact with each other in the absence of a brake-operating pressure so that the predominance-adjustment means can move the movable member together with the reaction piston while simultaneously varying the loading of the resilient biassing means.

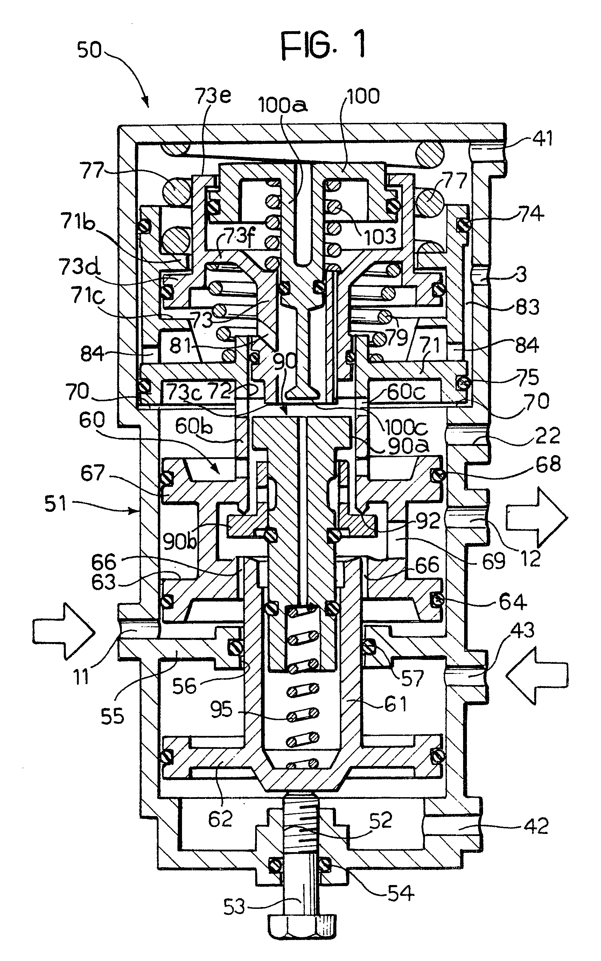

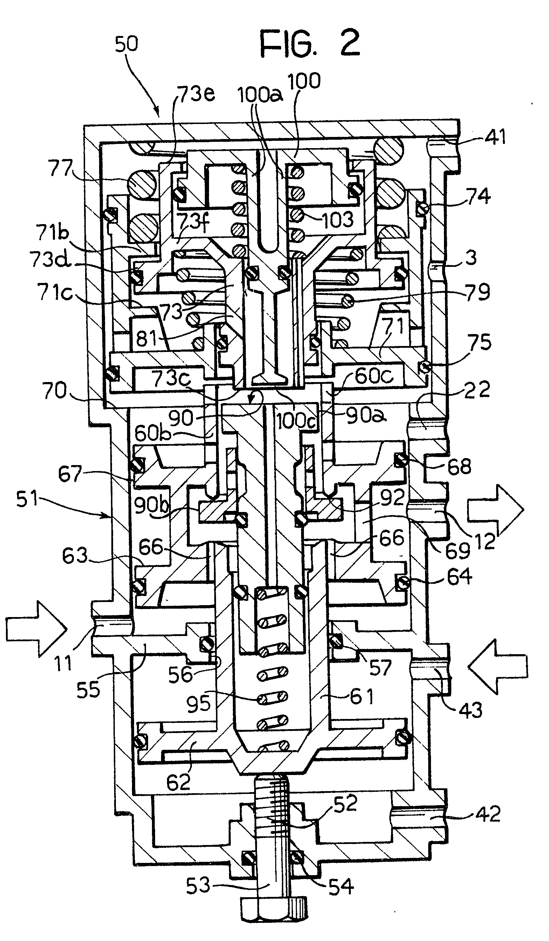

Further characteristics and advantages of the invention will become clear from the detailed description which follows with reference to the appended drawings, provided by way of non-limiting example, in which Figures 1 and 2 are axial sections of an adjustable-predominance, triple-control servo-distributor according to the invention, adjusted in the two Figures so as to present two different predominance values.

In the drawings, a triple-control servo-distributor according to the invention is generally indicated 50. It comprises a body 51 which, in the embodiment illustrated, is essentially in the shape of an elongate cylinder. This body is hollow and has a supply connector 11 in its central zone which is intended for connection to a pressure reservoir of the braking system of a tractor vehicle. An outlet connector, indicated 12, is intended for connection to the (automatic) pressure-supply line for reservoirs of the braking system of a trailer.

Further end inlet connectors of the body 51 are indicated 41 and 42.

Between the connectors 12 and 42 the body 51 has a further inlet connector 43, whilst a further outlet connector 22 is formed between the connectors 12 and 41. A discharge outlet to atmosphere, indicated 3, is formed in the wall of the body 51 between the connectors 41 and 22.

For ease of reading by experts in the art, the connectors described above have been identified by reference numerals corresponding to current conventional marking for identifying the orifices in equipment for braking systems.

A partly-threaded aperture 52 is formed in the base wall of the body 51 and is engaged by an adjustment screw 53 whose shank is correspondingly partially threaded. A sealing ring 54 is situated in the aperture 52 around the smooth portion of the shank of the screw 53.

Between the connectors 12 and 43, the body 51 has an internal transverse wall 55 with a central aperture 56 in which a sealing ring 57 is situated.

A movable member, generally indicated 60 has a hollow central portion 61 which is sealingly and axially slidable in the aperture 56 in the wall 55. Beneath this wall, the movable member has a circumferential projection 62 which is sealingly slidable like a piston in contact with the wall of the portion of the body 51 between the connectors 42 and 43.

The connectors 41 and 42 are intended for connection to the outputs of the two sections of the duplex or tandem brake-operating valve (distributor), which is operated by means of the brake pedal to cause braking in the two independent circuits of the tractor vehicle.

The connector 43, on the other hand, is intended for connection to a manually-operable valve or distributor for operating the parking and emergency brake. The region inside the body 51 between the wall 55 of the disc portion 62 of the movable apparatus 60 is normally kept pressurised, in known manner: the pressure in this chamber falls when the manually-operated valve or distributor is actuated to operate the parking and emergency brake connected to the connector 43.

Above the wall 55, the movable member 60 has a skirt portion 63 with an external sealing ring 64 which slides like a piston in contact with the wall of the body. A series of apertures 66 is formed in this skirt portion 63 of the movable member and puts the interior of the movable member into communication with the inlet connector 11. A further skirt portion 67 of the movable member 60 provided with a peripheral sealing ring 68 is movable between the connectors 12 and 22.

In operation, compressed air from a reservoir of the braking system of the tractor vehicle reaches the outlet connector 12 through the connector 11 and the passages 66 and reaches the pressure reservoir of the trailer braking system through the automatic line.

The upper axial end portion of the body 51 above the connector 22 has a larger diameter and forms a shoulder 70. A reaction piston 71 is sealingly slidable in this portion of the body and has a central aperture through which a further tubular piston 73 is axially and sealingly slidable.

The reaction piston 71 has a tubular extension 71a with an external end sealing ring 74 which is in contact with the wall of the body 51. A helical biassing spring 77 is situated between the top of the body 51 and an internal annular projection 71b of the reaction piston 71.

The piston 73 has a smaller-diameter tubular portion which is sealingly slidable in the aperture 72 of the reaction piston 71. An aperture 81 is formed in the wall of this portion of the piston 73. The lower end edge of the piston 73, indicated 73c, can act as a valve seat.

The piston 73 has a larger-diameter portion 73d which is sealingly slidable within the reaction piston 71, between the projection 71b and an underlying shoulder 71c. A spring 79 is interposed between the pistons 71 and 73 for biassing the latter against the projection 71b of the former.

An annular space between the wall of the body 51 and a smaller-diameter, external portion of the cylindrical wall of the piston 71 between the sealing rings 74 and 75 is indicated 83. This portion of the cylindrical wall of the reaction piston 71 has apertures 84 beneath the shoulder 71c.

A mushroom-shaped actuating piston, indicated 100, has a head which is sealingly slidable in the piston 73 between two shoulders 73e and 73f of the latter. The piston 100 has a shank 100 a which is slidable within the smaller-diameter tubular portion of the piston 73. A spring 103 is situated around the shank of the piston 100 between the head of this piston and the piston 73.

The shank of the piston 100 has a lower, smaller-diameter extension which extends with ample clearance into the smaller-diameter tubular portion of the piston 73, almost up to the seat 73c. This extension of the piston 100 terminates in a plate-like portion 100c of smaller diameter than the inside diameter of the surrounding piston 73.

As stated above, the movable member 60 is hollow and its cavity opens upwardly towards the reaction piston 71. In particular, the upper part of the movable member 60 has a tubular wall 60b which extends upwards so that, at rest, it touches the piston 71. Passage holes 60c are formed in this wall.

The lower end of the tubular portion 60b of the movable member 60 terminates in a downwardly-facing valve seat 92 which extends into the cavity of the movable member.

A movable assembly generally indicated 90 includes an upper head 90a facing the seat 73c of the piston 73 and an annular ring 90b in its central portion having one surface facing the valve seat 92 and its opposite surface facing the passages 66.

The movable member 60 has a cylindrical wall around the seat 92 and the ring 90b of the movable assembly 90 with at least one aperture 69 formed therein.

A spring 95 is interposed between the bottom of the cavity in the movable member 60 and the movable assembly 90 and urges the latter upwardly into the position illustrated in which the ring 90b bears against the seat 92 in the form of an obturator.

The operation of the servo-distributor illustrated will now be described in brief. Further details of the operation of this servo-distributor can be obtained from European patent application No. 88830357.5.

In the drawings, the servo-distributor is shown in the condition it assumes at rest when the tractor vehicle is running normally. In this situation the connector 43 is supplied with compressed air which keeps the movable member 60 against the upper end of the adjustment screw 53. The compressed air which is supplied through the inlet connector 11 passes through the holes 66 and the aperture 69 and reaches the outlet connector 12, passing through the automatic supply line to the reservoirs of the trailer. The ring 90b of the movable body 90 is against the seat 92 while the head 90a is spaced from the seat 73c of the piston 73. The connector 22 is thus in communication with the discharge aperture 3.

If the brake pedal of the tractor is now operated, compressed air is supplied to the servo-distributor through the connectors 41 and 42. The pressure supplied through the connector 42 causes the movable member 60 to rise while the pressure supplied to the connector 41 initially causes the pistons 73 and 100 to descend together until the piston 73 abuts the shoulder 71c of the piston 71. This is because the spring 103 is preloaded.

As soon as the head 90a of the movable assembly 90 abuts the seat 73c, the connector 22 is disconnected from the discharge aperture 3.

Further downward movement of the piston 73 causes the ring 90b to move away from the seat 92 so that the connector 22 is put into communication with the connector 11 through the valve 90b-92 which is now open. The compressed air is thus supplied to the brake members of the trailer through the regulable line connected to the connector 22.

The pressure supplied to the brake members of the trailer acts on the lower face of the reaction piston 71 and, as soon as the pressure supplied to the stop members has reached a predetermined value (which depends on the value of the brake-operating pressure supplied to the connectors 41 and/or 42) the reaction piston 71 moves upwards, compressing the spring 77. As it moves upwards, the piston 71 drives the actuating piston 73 until the valuve 90b-92 is closed. When this happens, the connector 22 is disconnected from the connector 11 and the braking pressure supplied to the trailer brake members stops increasing.

In order to achieve the predominance defined above, it is possible, by suitable dimensioning of the spring 77 and of the reaction piston 71, to arrange for the valve 92b-92 to close again when the pressure supplied to the brake members of the trailer exceeds the brake-operating pressure supplied to the connector 41 and/or 42.

If, at rest, the adjustment screw 53 is rotated in the sense corresponding to upward displacement of the movable member 60, the reaction piston 71 is consequently also displaced upwards and loads the spring 77 correspondingly. This operation results in an increase in the predominance. In effect, as a result of the greater loading of the biassing spring 77, the equilibriium condition at which the valve 90b-92 closes again during braking occurs at a higher value of the pressure acting on the lower face of the piston 71, and hence at a higher value of the pressure supplied to the brake members of the trailer.

Thus in the condition of Figure 2, the predominance of the braking pressure supplied the brake members of the trailer is greater than in the case of Figure 1.

In the servo-distributor according to the invention, the increase in predominance achieved by means of the adjustment screw 53 also causes a delay in the braking effected through the connector 42 (or 43) with respect to that effected by means of the pressure supplied to the connector 41. This delay increases as the predominance increases, as a reuslt of the gradually increasing loading of the biassing spring 77. This characteristic may be advantageous in some applications.

## Claims

1. A pneumatic valve for controlling the braking of a trailer, comprising a body (51) in which are mounted
a movable member (60) in which a normally-closed valve (90b, 92) with a seat (92) and an obturator (90b) is formed, for controlling the pressure supplied to the brake members of the trailer,
a movable actuating piston (100) which is arranged to be moved by a brake-operating pressure towards the member (60) and to cause the opening of the value (90b, 92),
a reaction piston (71), facing the member (60) and exposed to the pressure supplied to the brake members as a result of the opening of the valve (90b, 92); the reaction piston (71) being arranged to return the actuating piston (100), against the action of resilient biassing means (77), to a position in which it enables the valve (90b, 92) to close again when the pressure supplied to the brake members reaches a predetermined value dependent on the value of the brake-operating presure, and
manually-operable means (52, 53) for adjusting the predominance arranged to modify the position of the movable member (70) in the body (51),
characterised in that the movable member (60) and the reaction piston (71) are so formed that they are in contact with each other in the absence of a brake-operating pressure so that the predominance-adjustment means (52, 53) can move the movable member (60) together with reaction piston (71) while simultaneously varying the loading of the resilient biassing means (77).

2. A pneumatic valve for controlling the braking of a trailer, in particular a double- or triple-control valve, comprising a body (51) in which there are mounted
a movable member (60) in which is formed a normally-closed valve (90b, 92) with a seat (92) and an obturator (90b) which controls the pressure supplied to the brake members of the trailer,
a first actuating piston (100) arranged, as a result of a first brake-operating pressure supplied to a first aperture (41) of the body (51), to move towards the member (60) and to cause the opening of the valve (90b, 92),
a second actuating piston (62) arranged, as a result of a second brake-operating pressure or a vacuum supplied through a further aperture (42 or 43) of the body (51) to cause the movement of the member (60) towards the first actuating piston (100) to cause the opening of the valve (90b, 92),
a reaction piston (71) which faces the member (60) and is exposed to the pressure supplied to the brake members as a result of the opening of the valve (90b, 92); the reaction piston (71) being adapted to bring the first actuating piston (100), against the action of resilient biassing means (77), into a position in which itn enables the valve (90b, 92) to close again when the pressure supplied to the brake members reaches a predetermined value,
manually-operable predominance-adjustment means (52, 53), arranged to modify the position of the movable member (70) of the body (51):
characterised in that the movable member (60) and the reaction piston (71) are so formed as to be in contact with each other in the absence of the first and second operating pressures or the said vacuum, and in that the predominance-adjustment means (52, 53) are able to move the member (80) together with the reaction piston (71), while simultaneously varying the loading of the resilient biassing means (77) so that an increase in the predominance causes a delay in the opening of the valve (90b, 92) by the second actuating piston (62) with respect to its opening by the first piston (100).

# FIG. 1

FIG. 2